# EUROPÄISCHE PATENTSCHRIFT

(11) **EP 0 937 562 B1**
(45) Veröffentlichungstag und Bekanntmachung des Hinweises auf die Patenterteilung: **05.09.2001**
(21) Anmeldenummer: 99100286.6
(22) Anmeldetag: 09.01.1999
(51) Int. Cl.: B29C 33/38, B21D 26/08

(54) **Verfahren zur Oberflächenstrukturierung und oberflächenstrukturiertes Werkstück**
Process for defining a surface structure and part having a structured surface
Procédé pour structurer une surface et pièce ayant une surface structurée

(30) Priorität: 19.02.1998 DE 19806870
(43) Veröffentlichungstag der Anmeldung: 25.08.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: Ziegler, Lars, 71229 Leonberg (DE); Elsner, Peter Dr.-Ing., 76327 Pfinztal (DE); Komanschek, Volker, 72827 Wannweil (DE); Keicher, Thomas Dr., 76327 Pfinztal (DE); Eyerer, Peter Prof.Dr.-Ing., 76228 Karlsruhe (DE)

(56) Entgegenhaltungen:
- EP-A- 0 351 154
- FR-A- 2 040 910
- US-A- 4 551 297
- PATENT ABSTRACTS OF JAPAN vol. 007, no. 085 (M-206), 8. April 1983 & JP 58 009728 A (ASAHI KASEI KOGYO KK), 20. Januar 1983

## Beschreibung

Die Erfindung betrifft ein Verfahren zur Oberflächenstrukturierung von Werkstücken, wie Formwerkzeugen für die Kunststoffverarbeitung oder Erodierelektroden zur Herstellung von Formwerkzeugen, gemäß dem Oberbegriff des Anspruchs 1 oder des Anspruchs 2 sowie ein Werkstück gemäß dem Oberbegriff des Anspruchs 8.

Damit Formteile aus Kunststoff dekorativ wirken und/oder kratzunempfindlich sind, weisen diese eine strukturierte Oberfläche auf. Das Strukturieren hat nicht nur ästhetische Vorteile. Kleinere Oberflächenfehler, die im Formungsprozess auftreten können, werden durch die Struktur verdeckt. Nicht nur Spritzgußteile sondern praktisch jedes Teil, das mit einem Formungsprozeß hergestellt wird, kann oberflächenstrukturiert ausgebildet werden.

Geeignete Werkzeuge für die Kunststoffverarbeitung zur Herstellung derartiger Formteile sind beispielsweise Spritzgießwerkzeuge, Blaswerkzeuge, Preßwerkzeuge, Vakuumformen, Schäumwerkzeuge und Druckgießwerkzeuge. Um die Formteile mit einer strukturierten Oberfläche auszubilden muss zuvor die Struktur als Negativabbild auf die entsprechenden Oberfläche des Werkzeugs abgebildet werden. Um die Struktur in die Werkzeugoberfläche abzubilden sind neben Strahltechniken das Galvanisieren, das fotochemische Ätzen und die elektrochemische Auflösung bekannt. Diese Verfahren sind beispielsweise in "Werkzeugbau für die Kunststoff-Verarbeitung", Dr.-Ing. Klaus Stoeckhert, 3.Auflage, Carl Hanser Verlag, Seite 392 bis 402 und in "Anleitung zum Bau von Spritzgießwerkzeugen", Georg Menges, Paul Mohren, 3.Auflage, Carl Hanser Verlag, Seite 50 bis 70 beschrieben.

Sämtliche Verfahren haben den Nachteil, das sie sehr aufwendig, langwierig und kostenintensiv sind. Ein weiterer Nachteil ist, daß die bekannten Verfahren stark umweltbelastend sind und beispielsweise in Deutschland aufgrund strenger Umweltauflagen zum Teil nicht mehr durchgeführt werden dürfen. Der notwendige Transport aus anderen Ländern stellt eine weitere Umweltbelastung dar.

Das fotochemische Ätzen beispielsweise hat noch die weiteren Nachteile, daß mehrstufige Dessins nur in mehrmaligen Wiederholen des Ätzverfahrens herstellbar sind. Ledemarbungen beispielsweise können nicht in der erwünschten Weise naturgetreu wiedergegeben werden. Auch sind die geätzten Strukturen häufig scharfkantig, so daß ein nachträgliches Bestrahlen mit einem geeigneten Medium, beispielsweise Glaskugeln, notwendig ist. Es bedarf großer Erfahrung um zufriedenstellende Ergebnisse des Ätzverfahrens zu erhalten. Eine weitere nachteilige Voraussetzung dieses Verfahrens ist ein homogenes Gefüge und eine homogene Härte des zu bearbeitenden Materials.

Die Anlagen für das Verfahren der elektrochemische Auflösung (ECM) sind sehr teuer und eignen sich deshalb nur für Werkstükke großer Serien mit gleicher Geometrie. Weiter nachteilig ist, daß das Verfahren viel Know-how erfordert.

Aus der JP-A-58009728 ist ein Verfahren zur Metallumformung mittels Sprengstoff bekannt. Dabei wird eine Metallplatte über einen speziell geformten Block befestigt und mit Hilfe einer Sprengstoffschicht auf den Block gepresst. In diesem Verfahren wird die gesamte Metallplatte massiv umgeformt. Das Einsprengen ersetzt ein Pressen oder Stanzen der Metallplatte. Die Metallplatte weist nach dem Umformprozess die gewellte Form der Blockoberfläche auf. Eine Bearbeitung lediglich der Oberfläche des Metalls, bei der also das Metall nicht verformt, sondern lediglich die Oberfläche bearbeitet wird, ist nicht möglich.

Aus der FR-A 2 040 910 ist ein weiteres Verfahren zur Metallumformung mittels Sprengstoff bekannt, bei der eine Metallplatte auf einer weichen Schicht angeordnet ist, die wiederum auf einem festen Sockel aufruht. Die gewünschte Form, die die Metallplatte nach der Sprengung haben soll, wird durch den in einem bestimmten Muster verteilt auf der Metallplatte angeordneten Sprengstoff bestimmt, sowie durch die Materialeigenschaften der weichen Schicht. Eine Oberflächenbearbeitung ohne massive Umformung ist ebenfalls nicht möglich.

Ausgehend von den bekannten Verfahren und damit hergestellter Werkstücke ist es Aufgabe der Erfindung ein verbessertes Verfahren anzugeben, daß die vorgenannten Nachteile vermeidet, sowie ein mit diesem Verfahren hergestelltes Werkstück bereitzustellen.

Diese Aufgabe wird gelöst durch ein Verfahren mit den Merkmalen des Anspruchs 1 oder 2 und ein Werkstück mit den Merkmalen des Anspruchs 8.

Erfindungsgemäß wird die in das Werkstück abzubildende Struktur in die Werkstückoberfläche durch Sprengen eingebracht, wozu entweder eine die strukturierte Oberfläche aufweisende Strukturschicht zwischen einer Sprengstoffschicht und der Werkstückoberfläche angeordnet wird und durch Zünden der Sprengstoffschicht die Struktur in die Werkstückoberfläche eingesprengt wird oder eine oberflächenstrukturierte Sprengstoffschicht auf der Werkstückoberfläche angeordnet wird und die Struktur durch Zünden der Sprengstoffschicht auf das Werkstück übertragen und abgeprägt wird. Durch die detonative Umsetzung von Explosivstoffen entwickelt sich mit steilem Druckanstieg ein hoher Detonationsdruck, wodurch die Struktur in das Werkstück eingeprägt wird. Dieses neuartige Verfahren kann ohne die umweltbelastenden chemischen Substanzen, die in den Verfahren nach dem Stand der Technik notwendig sind, durchgeführt werden. Galvanische und ätzende Prozeßschritte sind überflüssig. Es ist erheblich schneller durchzuführen und bietet daher verkürzte Herstellzeiten für die mit dem erfindungsgemäßen Verfahren hergestellten Werkzeuge. Durch das Zünden der Sprengstoffschicht über der Werkstückoberfläche wird zudem eine Verdichtung des Werkstückmaterials und damit höhere Werkzeugstandzeiten bewirkt. Das Verfahren ist unabhängig von der Homogenität des Gefüges und der Härte des Werkzeugmaterials.

Das erfindungsgemäße Verfahren ist insbesondere vorteilhaft einsetzbar für schlecht ätzbare Materialien des zu bearbeitenden Werkstücks.

Strukturen, wie beispielsweise eine Ledernarbung können erheblich naturgetreuer in die Werkstückoberfläche abgebildet werden. Ein weiterer wesentlicher Vorteil ist, daß sogenannte Freiformflächen, also nicht geometrisch beschreibbare und damit nur mit größerem Aufwand maschinell bearbeitbare Flächen, ebenso einfach strukturiert werden können wie geometrische Flächen.

Mit dem erfindungsgemäßen Verfahren lassen sich durch Auswahl der eingesetzten Materialien und eingesetzten Mengen Sprengstoffs scharfkantige Strukturen vermeiden. Eine Nachbearbeitung der eingesprengten Struktur ist in den meisten Fällen nicht notwendig.

Wenn zwischen der Sprengstoffschicht und der Werkstückoberfläche wenigstens eine Strukturschicht, die die strukturierte Oberfläche aufweist, eingelegt wird, wird auf der Werkstückoberfläche ein Negativabbild der Struktur erhalten. Dieses Verfahren ist daher vorteilhaft für die Strukturierung von Formwerkzeugen, die die Struktur wieder auf das Formteil übertragen, das dann das Positivabbild der Struktur aufweist. Die Strukturschicht kann eine beliebige Schicht eines Stoffes sein, dessen Struktur in das Werkstück eingeprägt werden soll. Als Strukturschicht kämen beispielsweise Leder, Kunstleder, ein Naturstoff, wie beispielsweise ein Laubblatt oder ein sonstiges Blatt einer Pflanze, ein Gewebe oder ein sonstiger dekorativer Stoff in Betracht. In dieser Ausgestaltung ist das Verfahren äußerst einfach durchzuführen, denn es müssen lediglich die Strukturschicht und die Sprengstoffschicht auf das Werkstück gelegt, und der Sprengstoff gezündet werden.

Bevorzugt sollte die Strukturschicht möglichst dünn sein, damit nur eine dünne Sprengstoffschicht mit entsprechend geringem Sprengstoffverbrauch notwendig ist, um die Struktur in die Werkstückoberfläche einzusprengen, wobei die Sprengstoffmenge pro Fläche selbstverständlich abhängig ist von dem Material des zu bearbeitenden Werkstücks. Es hat sich gezeigt, daß je dünner die Strukturschicht ist, desto kontrastreicher ist die auf das Werkstück abgeprägte Struktur.

Wenn der Sprengstoff eine hohe Detonationsgeschwindigkeit aufweist wird die einzusprengende Struktur an allen Punkten quasi gleichzeitg in die Werkstückoberfläche eingesprengt, so daß der Detonationsdruck während des Sprengens zu jeder Zeit über die gesamte Oberfläche im wesentlichen gleich ist und die Struktur nicht verzerrt in die Werkstückoberfläche eingesprengt wird. Dadurch wird ein klares Abbild der Struktur erhalten und eine hohe Prozeßsicherheit gewährleistet.

Zur gezielten Beeinflussung des Detonationsdruckes kann in einer Ausgestaltung der Erfindung zwischen der Werkstückoberfläche und der Strukturschicht und/oder der Strukturschicht und der Sprengstoffschicht wenigstens eine Zwischenschicht vorgesehen sein. Durch beispielsweise Einlegen einer im wesentlichen ebenen Zwischenschicht wird der Detonationsdruck gedämpft und dadurch scharfe Kanten in der eingeprägten Struktur vermeiden. Dies kann zum einen gewünschte optische Effekte bewirken, und zum anderen ist ein Nacharbeiten der eingesprengten Struktur nicht mehr notwendig. Die Zwischenschicht oder -schichten können aus Luft gebildet sein. Dann sind die Strukturschicht und die Werkstückoberfläche und/oder die Sprengstoffschicht über Abstandshalter lediglich auf Abstand gehalten. Als weitere Materialien für die Zwischenschichten kommen z.B. Wasser, Papier oder auch ein Blech in Betracht. Wenn eine Zwischenschicht beispielsweise aus NaCI besteht, lassen sich eventuell in das Werkstück eingesprengte Zwischenschichtreste in einfacher Weise mittels Wasser herauslösen.

Wenn die Zwischenschichten ebenfalls Strukturen aufweisen, können zwei oder mehrere sich überlagernde Strukturen in die Werkstückoberfläche eingesprengt werden. Dadurch können besondere optische Effekte erzielt werden oder mehrstufige Dessins in einem Schritt, also mit nur einer Sprengung, in das Werkstück eingebracht werden.

In einer alternativen Ausgestaltung des erfindungsgemäßen Verfahrens wird eine auf die Werkstückoberfläche zu bringende Struktur als Negativabbild auf eine Oberfläche der Sprengstoffschicht aufgebracht und die Sprengstoffschicht mit ihrer strukturierten Oberfläche auf die Werkstückoberfläche aufgelegt und dann gezündet. Eine separate Strukturschicht ist in diesem Fall nicht notwendig. Diese Alternative ist vorteilhaft für die Herstellung von beispielsweise Erodierelektroden für die Herstellung von gleichstrukturierten Formwerkzeugen. Die Erodierelektrode trägt dann das Positivabbild, so daß in das Formwerkzeug mittels der Erodierelektrode ein Negativabbild eingeformt wird und das mit diesem Formwerkzeug erhaltenen Formteil letztlich ein Positivabbild der Struktur trägt.

Bevorzugt wird dabei die Struktur auf die Sprengstoffoberfläche übertragen, indem ein pastenförmiger, flüssiger oder geschmolzener Sprengstoff auf die abzubildende Struktur, beispielsweise eine Lederschicht, aufgetragen wird und der Sprengstoff zu einer Sprengstoffschicht durch Trocknen oder Abkühlen aushärtet und von der Struktur abgezogen wird. Mit dieser Verfahrensweise ist ein wiederholtes Abbilden derselben Struktur auf mehrere Sprengstoffschichten in einfacher Weise durchführbar.

Ein erfindungsgemäßes Werkstück, wie Formwerkzeug für die Kunststoffverarbeitung, Erodierelektrode zur Formwerkzeugherstellung o. dgl., mit einer strukturierten Oberfläche, bei der die Oberflächenstruktur mittels einer Sprengstoffschicht in die Werkstückoberfläche eingesprengt ist, ist sehr kostengünstig und schnell herstellbar. Darüberhinaus ist die gewünschte Struktur naturgetreuer wiedergegeben.

Für die Herstellung von beispielsweise Formwerkzeugen ist es vorteilhaft, wenn bei dem Werkstück, also dem Formwerkzeug, die Struktur als Negativabbild in die Werkstückoberfläche eingesprengt ist und für die Herstellung von Erodierelektroden ist es vorteilhaft, wenn bei dem Werkstück die Struktur als Positivabbild in die Werkstückoberfläche eingesprengt ist.

Im Folgenden wird die Erfindung anhand von Ausführungsbeispielen unter Bezugnahme auf die Zeichnung im einzelnen erläutert. Es zeigen:
- **Fig. 1**: ein zu bearbeitendes Werkstück mit aufgelegter Strukturschicht und Sprengstoffschicht;
- **Fig 2**: ein zu bearbeitendes Werkstück mit aufgelegter, oberflächenstrukturierter Sprengstoffschicht;

Das erfindungsgemäße Verfahren wurde wie folgt durchgeführt:

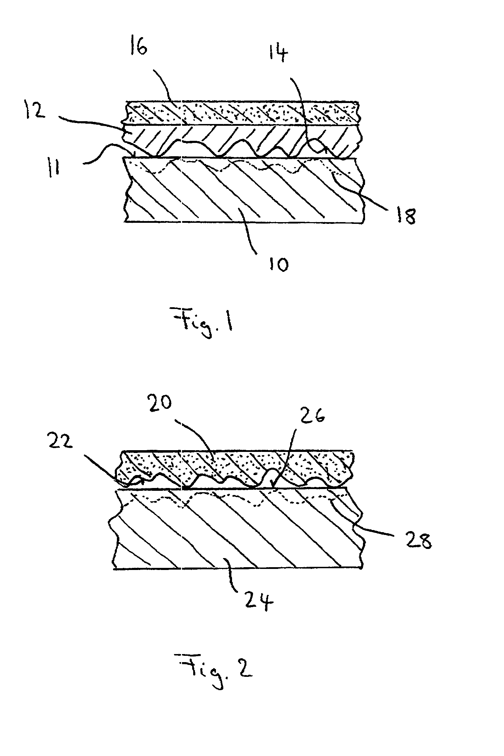

Auf eine zu bearbeitende Oberfläche 11 eines Werkstücks 10, das in einem ersten Ausführungsbeispiel aus Stahl bestand, wurde eine Strukturschicht 12, in diesem Fall eine 0,5 mm starke Naturlederschicht 12 aufgelegt. Die strukturierte Oberfläche des Leders ist mit der Bezugsziffer 14 angedeutet und in Fig. 1 schematisch und nicht maßstabsgetreu dargestellt. Auf die Strukturschicht 12 wurde eine Sprengstofffolie 16 mit einer Dicke von 0,8 mm bis 1,2 mm gelegt. Eine derartige Sprengstofffolie ist im Handel unter der Marke "Resaflex" von der Firma Hero Sicherheitsservice GmbH erhältlich oder aus dem schmelzbaren Sprengstoff, der unter der Bezeichnung "Composition B" allgemein bekannt ist und bei dem es sich um eine RDX/TNT Mischung handelt, leicht herstellbar. Danach wurde die Sprengstofffolie 16 gezündet, wodurch das Leder 12 eine derartige Beschleunigung in Richtung auf das Werkstück 10 erfährt, daß sich das Leder 12 mit seiner Struktur 14 in die Werkstückoberfläche 11 einprägt. Die eingeprägte Struktur ist mit der gestrichelten Linie 18 angedeutet.

Die Prozeßparameter des erfindungsgemäßen Verfahrens - das sind im wesentlichen die Dicke der Sprengstofffolie 16, also die Menge Sprengstoff pro Fläche, die Dicke der Strukturschicht 12 und die Leistungsparameter des Sprengstoffs - müssen aufeinander und auf das Material des Werkstücks und auf das Material der Strukturschicht durch geeignete Versuche abgestimmt werden.

In einem zweiten Ausführungsbeispiel wurde ein flüssiger, geschmolzener oder pastenförmiger Sprengstoff auf eine zu übertragende Struktur, beispielsweise Leder, als Schicht aufgetragen. Der nach einiger Zeit etwas ausgehärtete Sprengstoff und die Strukturschicht werden dann durch abziehen voneinander getrennt, so daß die Sprengstoffschicht auf ihrer einen Oberfläche ein Negativabbild der Struktur aufweist.

Wie in Fig. 2 dargestellt, wurde die so erhaltene Sprengstoffschicht 20 mit ihrer strukturierten Oberfläche 22 auf das zu bearbeitende Werkstück 24 gelegt. Entsprechend der Struktur 22 liegt eine unterschiedliche Massenbelegung der Sprengstoffschicht 20 und ein variierender Abstand der Sprengstoffschicht 20 von der Werkstückoberfläche 26 vor. Dadurch entsteht auf der Werkstückoberfläche 26 bei Detonation der Sprengstoffschicht 20 ein entsprechend dem Verlauf der Struktur 22 unterschiedlich starker Druck, so daß sich die Struktur 22 in das Werkstück 24 eingeprägt und auf der Werkstückoberfläche 26 ein Positivabbild (gestrichelte Linie 28) der Struktur erhalten wird.

Es wäre auch denkbar zunächst die Originalstruktur beispielsweise auf eine Aluminiumfolie abzuprägen und die Struktur von der Aluminiumfolie auf die Sprengstoffschicht zu übertragen. Dann trägt die Sprengstoffschicht ein Positivabbild und beim Sprengen der auf die Werkstückoberfläche aufgelegten Sprengstoffschicht erhält das Werkstück ein Negativabbild der Struktur.

## Patentansprüche

1. Verfahren zur Oberflächenstrukturierung von Werkstücken, insbesondere Formwerkzeugen für die Kunststoffverarbeitung, Erodierelektroden zur Formwerkzeugherstellung o.dgl. Werkzeuge, bei dem eine strukturierte Oberfläche auf eine unstrukturierte Werkstückoberfläche aufgelegt wird und die Struktur in die Werkstückoberfläche abgebildet wird, **dadurch gekennzeichnet,** daß eine die strukturierte Oberfläche (14) aufweisende Strukturschicht (12) zwischen einer Sprengstoffschicht (16) und der Werkstückoberfläche (11) angeordnet wird und durch Zünden der Sprengstoffschicht (16) die Struktur (14) in die Werkstückoberfläche (11) eingesprengt wird.

2. Verfahren zur Oberflächenstrukturierung von Werkstücken, insbesondere Formwerkzeugen für die Kunststoffverarbeitung, Erodierelektroden zur Formwerkzeugherstellung o.dgl. Werkzeuge, bei dem eine strukturierte Oberfläche auf eine unstrukturierte Werkstückoberfläche aufgelegt wird und die Struktur in die Werkstückoberfläche abgebildet wird, **dadurch gekennzeichnet,** daß eine oberflächenstrukturierte Sprengstoffschicht (20) auf einer Werkstückoberfläche (26) angeordnet wird und die Struktur (22) durch Zünden der Sprengstoffschicht (20) in die Werkstückoberfläche ohne Massivumformung eingeprägt wird.

3. Verfahren nach Anspruch 1, **dadurch gekennzeichnet**, daß die Strukturschicht (12) möglichst dünn ist.

4. Verfahren nach einem der vorhergehenden Ansprüche, **dadurch gekennzeichnet**, daß der Sprengstoff eine hohe Detonationsgeschwindigkeit aufweist.

5. Verfahren nach einem der vorhergehenden Ansprüche, **dadurch gekennzeichnet**, daß zwischen der Werkstückoberfläche und der Strukturschicht und/oder der Strukturschicht und der Sprengstoffschicht wenigstens eine Zwischenschicht vorgesehen ist.

6. Verfahren nach einem der vorhergehenden Ansprüche 2 bis 5, **dadurch gekennzeichnet**, daß eine auf die Werkstückoberfläche (26) zu bringende Struktur als Negativabbild auf eine Oberfläche (22) der Sprengstoffschicht (20) aufgebracht wird und die Sprengstoffschicht (20) mit ihrer strukturierten Oberfläche (22) auf die Werkstückoberfläche (26) aufgelegt und dann gezündet wird.

7. Verfahren nach Anspruch 6, **dadurch gekennzeichnet**, daß auf die Struktur ein pastenförmiger, flüssiger oder geschmolzener Sprengstoff aufgetragen wird, dann der Sprengstoff zu einer Sprengstoffschicht (20) aushärtet und von der Struktur abgezogen wird und auf die Werkstückoberfläche (26) aufgelegt wird.

8. Werkstück für die Kunststoffverarbeitung, wie Spritzgießwerkzeug, Blaswerkzeug, Preßwerkzeug, Schäumwerkzeug oder Druckgießwerkzeug oder Erodierelektrode zur Formwerkzeugherstellung o. dgl., mit einer strukturierten Oberfläche, **dadurch gekennzeichnet**, daß die Struktur mittels einer Sprengstoffschicht in die Werkstückoberfläche eingesprengt ist.

9. Werkstück nach Anspruch 8, **dadurch gekennzeichnet**, daß die Struktur als Negativabbild in die Werkstückoberfläche eingesprengt ist.

10. Werkstück nach Anspruch 8, **dadurch gekennzeichnet**, daß die Struktur als Positivabbild in die Werkstückoberfläche eingesprengt ist.

## Claims

1. Method for structuring the surface of workpieces, in particular form tools for plastic material processing, erosion electrodes for producing form tools or similar tools, in which method a structured surface is placed on an unstructured workpiece surface and the structure is reproduced in the workpiece surface, **characterised in that** a structured surface layer (12) having the structured surface (14) is disposed between a layer of explosive (16) and the workpiece surface (11) and the structure (14) is formed explosively on the workpiece surface (11) by igniting the layer of explosive (16).

2. Method for structuring the surface of workpieces, in particular form tools for plastic material processing, erosion electrodes for producing form tools or similar tools, in which method a structured surface is placed on an unstructured workpiece surface and the structure is reproduced in the workpiece surface, **characterised in that** a surface-structured layer of explosive (20) is disposed on a workpiece surface (26) and the structure (22) is impressed on the workpiece surface by igniting the layer of explosive (20) without massive forming.

3. Method according to claim 1, **characterised in that** the structured layer (12) is as thin as possible.

4. Method according to one of the preceding claims, **characterised in that** the explosive has a high detonation rate.

5. Method according to one of the preceding claims, **characterised in that** at least one intermediate layer is provided between the workpiece surface and the structured layer and/or the structured layer and the layer of explosive.

6. Method according to one of the preceding claims 2 to 5, **characterised in that** a structure to be produced on the workpiece surface (26) is applied as a negative image on a surface (22) of the layer of explosive (20) and the layer of explosive (20) is placed by its structured surface (22) on the workpiece surface (26) and is then ignited.

7. Method according to claim 6, **characterised in that** a paste-like, liquid or molten explosive is applied to the structure, then the explosive is hardened into a layer of explosive (20) and pulled off the structure and placed on the workpiece surface (26).

8. Workpiece for plastic material processing, such as injection-moulded tools, blow moulded tools, compression moulded tools, foam moulded tools or pressure die-cast tools or erosion electrodes for producing form tools or the like, having a structured surface, **characterised in that** the structure is formed explosively in the workpiece surface by means of a layer of explosive.

9. Workpiece according to claim 8, **characterised in that** the structure is formed explosively in the workpiece surface as a negative image.

10. Workpiece according to claim 8, **characterised in that** the structure is formed explosively in the workpiece surface as a positive image.

## Revendications

1. Procédé pour structurer la surface de pièces, en particulier d'outils de moulage utilisés dans le façonnage de matières plastiques, ou d'électrodes d'érosion utilisées pour fabriquer des moules ou des outils analogues, selon lequel une surface structurée est posée sur la surface non structurée de la pièce et l'image de cette structure est réalisée à la surface de la pièce,
**caractérisé en ce qu**'
une couche de structuration (12) présentant une surface structurée (14) est placée entre une couche (16) d'un matériau explosif et la surface (11) de la pièce, la mise à feu de la couche d'explosif (16) créant l'empreinte de la structure (14) à la surface (11) de la pièce.

2. Procédé pour structurer la surface de pièces, en particulier d'outils de moulage utilisés dans le façonnage de matières plastiques, ou d'électrodes d'érosion utilisées pour fabriquer des moules ou des outils analogues, selon lequel une surface structurée est posée sur la surface non structurée de la pièce et l'image de cette structure est réalisée à la surface de la pièce,
**caractérisé en ce qu**'
une couche de matériau explosif (20), structurée en surface, est posée à la surface (26) de la pièce et la mise à feu de la couche d'explosif (20) crée l'empreinte de la structure (22) à la surface de la pièce, sans déformation massive.

3. Procédé selon la revendication 1,
**caractérisé en ce que**
la couche d'explosif (12) est aussi mince que possible.

4. Procédé selon l'une quelconque des revendications précédentes,
**caractérisé en ce que**
l'explosif est à haute vitesse de déflagration.

5. Procédé selon l'une des revendications précédentes,
**caractérisé en ce qu**'
il est prévu au moins une couche intermédiaire entre la surface de la pièce et la couche de structuration et/ou la couche de structuration et la couche d'explosif.

6. Procédé selon l'une quelconque des revendications 2 à 5,
**caractérisé en ce que**
la structure à apporter à la surface de la pièce (26) est déposée sous forme d'image négative sur une surface (22) de la couche d'explosif (20) et la couche d'explosif (20), par sa surface structurée (22) est posée sur la surface (26) de la pièce, puis mise à feu.

7. Procédé selon la revendication 6,
**caractérisé en ce qu**'
on dépose sur la structure un explosif pâteux, liquide ou fondu, qui est ensuite durci pour donner une couche d'explosif (20) et séparé de la structure, puis déposé à la surface (26) de la pièce.

8. Pièce pour le façonnage des matières plastiques, tel qu'outil de coulée par injection, outil de soufflage, outil de pressage, outil pour mousse ou outil de coulée sous pression, ou électrode d'érosion pour façonner des outils de formage ou analogues, présentant une surface structurée,
**caractérisée en ce que**
la structure est obtenue par empreinte réalisée à la surface de la pièce par l'intermédiaire d'une couche d'explosif.

9. Pièce selon la revendication 8,
**caractérisée en ce que**
la structure est réalisée par empreinte à la surface de la pièce, sous forme d'image négative.

10. Pièce selon la revendication 8,
**caractérisée en ce que**
la structure est réalisée par empreinte à la surface de la pièce, sous forme d'image positive.
